(19) Europäisches Patentamt
European Patent Office
Office européen des brevets

(11) Publication number: **0 227 043 A2**

(12) **EUROPEAN PATENT APPLICATION**

(21) Application number: 86117643.6

(22) Date of filing: 18.12.86

(51) Int. Cl.[4]: **B01D 13/04**

(30) Priority: 19.12.85 JP 286765/85
19.12.85 JP 286766/85

(43) Date of publication of application:
01.07.87 Bulletin 87/27

(84) Designated Contracting States:
DE FR GB IT NL

(71) Applicant: SUMITOMO CHEMICAL COMPANY, LIMITED
15 Kitahama 5-chome Higashi-ku
Osaka-shi Osaka 541(JP)

(72) Inventor: Fujita, Fumio
12-13, Kashiwazato-1-chome
Nishiyodogawa-ku Osaka(JP)
Inventor: Sanno, Haruyoshi
23-8, Egawa-1-chome Shimamotocho
Mishima-gun Osaka(JP)

(74) Representative: Vossius & Partner
Siebertstrasse 4 P.O. Box 86 07 67
D-8000 München 86(DE)

(54) **Composite semipermeable membrane and process for producing the same.**

(57) Described is a composite semipermeable membrane which is obtained by crosslinking, on a porous support, least one particular polyhydroxy compound and a particular polyamino compound with a multifunctional compound. This membrane has a high water permeability, excellent salt exclusion property and excellent resistance to oxidation.

EP 0 227 043 A2

Xerox Copy Centre

# COMPOSITE SEMIPERMEABLE MEMBRANE AND PROCESS FOR PRODUCING THE SAME

This invention relates to a novel composite semipermeable membrane and a process for producing the same.

## 2. DESCRIPTION OF THE PRIOR ART

In recent years, reverse osmosis and ultra-fibration systems which use semipermeable membranes of cellulose acetate etc. have come to be widely employed practically in such fields as desalination of sea water as well as waste water treatment, production of pure water, food industry, and medical treatment. A matter of great importance in these membrane separation processes is the selective permeability, namely the property to exclude solute and the water permeability, of the semi-permeable membrane used in the process. Particularly, it is not too much to say that what decides the economical efficiency of a process is the magnitude of water permeability. Further, in addition to water permeability, there are required for the properties of the membrane a high thermal resistance, wide pH range in which it is usable, and excellant resistance to oxidation.

The reverse osmosis membrane of cellulose acetate with asymmetric structure developed previously by Loeb and Scurirajan et al. has, in spite of its excellent basic properties, various defects, for example, susceptibility to hydrolysis, compaction, and degradation by microorganisms; and inability to be dried. Further, it has a defect of showing a low water permeability in low pressure operation. Accordingly, a large number of synthetic polymers have been proposed as a membrane material which can correct these defects. However, these membranes heretofore proposed each have their merits and demerits, and no membrane has yet been found which is satisfactory in all the points mentioned above.

On the other hand, a composite membrane has been developed which is different in film configuration from an asymmetric membrane. The composite membrane comprises an ultrathin film having semipermeability formed on a porous support. In contrast to an asymmetric membrane in which the whole of the membrane is formed of one and the same material, the raw materials for the porous support and for the ultrathin film of a composite membrane can be selected each independently and from a wide range, whereby the improvement of membrane properties can be expected.

As to examples of such composite membranes, Japanese Patent Application Kokai (Laid-Open) No. 133,282/74 discloses a composite semipermeable membrane obtained by forming on a porous support an ultrathin film of polyethyleneimine crosslinked with a multifunctional compound such as 2,4-tolylene diisocyanate. However, this composite semipermeable membrane is unsatisfactory in water permeability and poor in resistance to chlorine. Cadotte et al. of N.T.I.S (National Technical Information Service) Report - (PB, No. 253,193) has proposed to form an ultrathin film of polypiperazineamide on the surface of a porous support by impregnating the porous support with an aqueous piperazine solution and then contacting isophthalic acid chloride thereto, thereby to obtain a reverse osmosis membrane excellent in chlorine resistance. Although the membrane thus obtained is indeed improved in chlorine resistance, it is poor in mechanical strength and unsatisfactory in water permeability. Japanese Patent Application Kokai (Laid-Open) No. 139,802/80 discloses a composite semipermeable membrane obtained by forming on a porous support a thin film of piperazine crosslinked with a trifunctional compound such as trimesic acid chloride. However, also this film, though improved in point of chlorine resistance, is not fully satisfactory in respect of water permeability and salt exclusion property.

Further, these semipermeable composite membranes mentioned above are all generally used at operation conditions of relatively high pressure (40 atm or higher); in operations at low pressure (20 atm or lower) they show a low water permeability and hence cannot be regarded as useful membranes in practice.

## SUMMARY OF THE INVENTION

In view of these situations, the present inventors have made an extensive study to find a more excellent composite semipermeable membrane. As a result, it has been formed that a composite semipermeable membrane obtained by crosslinking, on a porous support, a specified polyhydroxy compound and a specified polyamine compound with a multifunctional compound has a high water permeability and an excellent salt exclusion property even in low pressure operation and has also an excellent resistance to oxidation. This invention has been accomplished on the basis of the above finding.

Thus, this invention provides a composite semipermeable membrane which is obtained by crosslinking, on a porous support, (1) at least one polyhydroxy compound selected from the group consisting of the compounds represented by the following general formulas (I), (II), (III) and (IV)

$$HO-(HC_2-CH_2-O)_{\ell}H \quad (I)$$

wherein $\ell$ denotes an integer from 1 to 500,

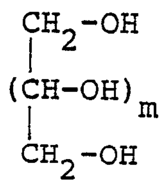

(II)

wherein m denotes an integer from 1 to 4,

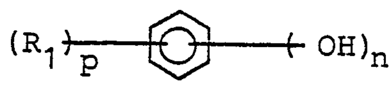

(III)

wherein n denotes an integer from 2 to 4 ; $R_1$ denotes a substituent; and p denotes 0 or a positive integer satisfying $p + n \leq 6$,

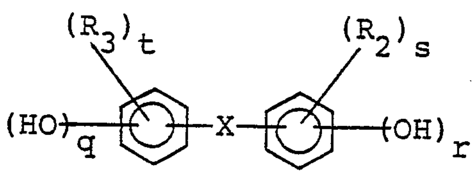

(IV)

wherein X denotes a simple bond or a divalent linking group; r and q each denotes 1 or 2; $R_2$ and $R_3$ each denotes a substituent; and s and t denote 0 or a positive integer satisfying $s + r \leq 5$ and $t + q \leq 5$, respectively, and (2) an amino compound having at least two secondary amino groups and no primary amino group in the molecule, with (3) a multifunctional compound capable of reacting with the hydroxyl group and a secondary amino group, and a process for producing the same.

## DETAILED DESCRIPTION OF THE INVENTION

This invention will now be described in detail below.

The polyhydroxy compounds used in this invention are compounds represented by the above-mentioned general formulas (I), (II), (III) and (IV) as mentioned above. Specific examples of the polyhydroxy compounds represented by the general formula (I) include polyhydric alcohols such as polyethylene glycol (average molecular weight : about 200 to 20,000), triethylene glycol, and ethylene glycol.

Examples of the compounds represented by the general formula (II) include polyhydric alcohols such as glycerol, erythritol, xylitol, and sorbitol.

Examples of the compounds represented by the general formula (III) inlcude polyhydric phenols such as hydroquinone, resorcinol, catechol, pyrogallol, and phloroglucinol, and polyhydric phenols wherein the aromatic nucleus of these compounds is further substituted with chlorine, bromine, iodine or an alkyl group of 1 to 4 carbon atoms and wherein $R_1$ is a halogen atom or lower alkyl group; hydroquinone being preferred among these.

Specific examples of the polyhydroxy compounds represented by the general formula (IV) include polyhydric phenols wherein X is a simple bond or a divalent hydrocarbon group, $-SO_2-$, -CO-, -S-or -O-, such as 4,4′-dihydroxybiphenyl, 2,2-bis(4-hydroxyphenyl)propane, bis(4-hydroxyphenyl)methane, 1,1-bis(4-hydroxyphenyl)ethane, bis(4-hydroxyphenyl)cyclohexylmethane, bis(4-hydroxyphenyl) sulfone, bis(4-hydroxyphenyl) ketone, bis(4-hydroxyphenyl) sulfide, and bis(4-hydroxyphenyl) ether, and further polyhydric phenols wherein the aromatic nucleus of these compounds is substituted with chlorine, bromine, iodine, or an alkyl group of 1 to 4 carbon atoms, and $R_2$ and $R_3$ are each an halogen atom or lower alkyl group, such as 3-chloro-4-4′-hydroxybiphenyl, 3,3′-dichloro-4,4′-hydroxybiphenyl, and bis(4-hydroxy-3,5-dimethylphenyl) ketone. Preferred among these is 2,2-bis(4-hydroxyphenyl)propane.

The amino compounds used in this invention are aliphatic, alicyclic or aromatic amino compounds having at least two secondary amino groups and no primary amino group in the molecule. Such amino compounds are exemplified by compounds represented by the following general formulas (V), (VI), (VII) and (VIII):

$R_4NH-Y-NHR_5$ (V)

wherein Y denotes an aliphatic, alicyclic, or aromatic group of 20 or less carbon atoms; and $R_4$ and $R_5$ each denotes an alkyl group of 1 to 3 carbon atoms,

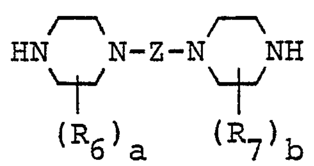

(VI)

wherein Z denotes an alkylene group of 1 to 4 carbon atoms; $R_6$ and $R_7$ each denotes an alkyl group of 1 to 3 carbon atoms; and a and b each denotes an integer from 0 to 4,

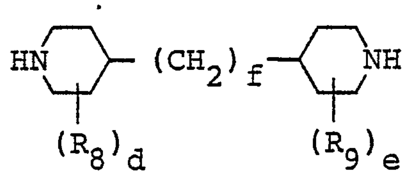

(VII)

wherein $R_8$ and $R_9$ each denotes an alkyl group of 1 to 3 carbon atoms; and d, e, and f each denotes an integer from 0 to 4,

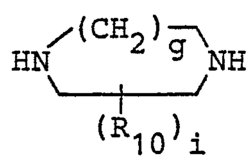

(VIII)

wherein $R_{10}$ denotes an alkyl group of 1 to 3 carbon atoms; g denotes 1 or 2; and i denotes an integer from 0 to 4.

specific examples of these amino compounds include N,N′-dimethylethylenediamine, N,N′-diethylpropanediamine, N,N′-dimethyl-m-phenylenediamine, N,N′-dimethyl-p-phenylenediamine, and N, N′-dimethyl-1,4-cyclohexylenediamine for the general formula (V) mentioned above; 1,3-dipiperazinylpropane, and dipiperazinylmethane for the general formula (VI); 1,3-di(4-piperidino)propane, 1,2-di(4-piperidino)-ethane, 4,4′-bipiperidine, and 3,3′-dimethyl-4,4′-bipiperidine for the general formula (VII); and piperazine, 2-methylpiperazine, 2,5-dimethylpiperazine, and homopiperazine for the general formula (VIII). These amino compounds may be used either singly or as a mixture of two or more thereof.

The porous supports used in this invention are those which do not exhibit an effective separating ability by themselves and are employed to support the thin film which exhibits separating ability and to impart strength to the film. As such porous supports, there may be used porous supports known to the art formed, for examplel, of such materials as polysulfone, polyethersulfone, polyacrylonitril, polyvinyl chloride, cellulose acetate and cellulose nitrate. For example, a porous support of polysulfone can be obtained according to the method described in OSW (Office of Saline Water, United States Government) Report No. 359.

These porous supports may be used as they are or, if necessary, after backed with textile fabrics or the like made of polyester, etc. for reinforcement.

The composite semipermeable membrane of this invention comprises a porous support and an ultrathin film having semipermeability formed on the porous support in close contact therewith by crosslinking-polymerizing a polyhydroxy compound and an amino compound by using a polyfunctional compound on the porous support. Such ultrathin film is usually prepared by coating or impregnating a porous support with a mixed solution of the polyhydroxy compound and the amino compound, then subjecting the resulting system to drying, and then contacting a multifunctional compound therewith.

The mixing ratio of the amino compound to the polyhydroxy compound is usually in the range of 5 to 500 parts by weight, preferably 10 to 300 parts by weight, more preferably 50 to 200 parts by weight, of the amino compound relative to 100 parts by weight of the polyhydroxy compound.

The solvent used in this invention should be one which can dissolve the polyhydroxy compound and the amino compound uniformly and does not deteriorate the porous support. Specific examples of usable solvents include methanol, ethanol, propanol, water, and the mixtures thereof. The concentration of the total of the polyhydroxy compound and the amino compound in the mixed solution may be selected generally from the range of 0.01 to 10% by weight, preferably 0.05 to 5% by weight, more preferably 0.2 to 3% by weight. The mixed solution may be incorporated with a surface active agent in order to show a decreased surface tension when used for coating or impregnation of the porous support. Also, bases such as an alkali hydroxide, sodium phosphate, and pyridine may be added thereto as the catalyst for the reaction with the multifunctional compound.

The coating or impregnation of the porous support with the mixed solution of the polyhydroxy compound and the amino compound may be conducted by any suitable method known in the art. It is conducted, for example, by coating the solution on the surface of the porous support or immersing the porous support in the mixed solution. A preferred example of such methods comprises coating or impregnating the porous support with the mixed solution, then allowing the resulting system to drain, for example in a vertical state, to remove the excess of the solution adhering to the porous support, and further subjecting it to drying to evaporate part or most of the solvent.

Although the conditions for drying are not specifically limited, the drying is conducted usually at a temperature not higher than the boiling point of the solvent for a time not less than 1 minute, preferably at 20 to 80°C for 1 to 20 minutes, more preferably at 20 to 40°C for 5 to 20 minutes.

Since a stable film comprising the polyhydroxy compound and the amino compound is formed on the surface of the porous support by such a drying treatment, the adhesion between the porous support and the ultrathin film which is formed by succeeding crosslinking polymerization with the multifunctional compounds is improved. Further, an excellent effect is obtained in the uniformity of the membrane and resultantly in the improvement and the stability of membrane properties.

The multifunctional compound used in this invention is a compound which has functional groups capable of reacting with the hydroxyl group and a secondary amino group, and includes, for example, a compound which has at least two groups of one or more kinds selected from an acid halide group, sulfonyl halide group, N-haloformyl group, and acid anhydride group in the molecule. More specific examples of the compound include isophthalic acid chloride, terephthalic acid chloride, trimesic acid chloride, pyromellitic acd chloride, cyclohexanedicarboxylic acid chloride, piperazine-N,N'-dicarbonyl chloride, dipiperidylmethane-N,N'-dicarbonyl chloride, pyridine-2,6-dicarboxylic acid chloride, 1-chlorosulfonylbenzene-3,4-dicarboxylic acid chloride, benzene-m-disulfonic acid chloride, 4-chloroformylphthalic acid anhydride, and pyromellitic acid anhydride.

Particularly preferrable compounds among the above-mentioned multifunctional compounds are trimesic acid chloride, isophthalic acid chloride, and terephthalic acid chloride. The multifunctional compound may be used either alone or as a mixture of two or more thereof.

The multifunctional compound is used after dissolved in a solvent which substantially neither swell nor dissolve the porous support and the addition polymerization product of the polyhydroxy compound and the amino compound. Examples of such solvents include hydrocarbon type solvents such as n-hexane, n-heptane, n-octane, and cyclohexane, and halogenated hydrocarbon type solvents such as 1,1,2-trichloro-1,2,2-trifluoroethane. The concentration of the multifunctional compound in the solvent is generally 0.1 to 5.0% by weight, preferably 0.5 to 3.0% by weight.

The crosslinking polymerization of the multifunctional compound with the polyhydroxy compound and the amino compound may be conducted, for example, by forming a coating film of the polyhydroxy compound and the amino compound on the porous support mentioned above, then immersing the whole system in a solution of the multifunctional compound approximately for 10 seconds to 5 minutes, draining off the excess of the multifunctional compound solution if necessary, and then subjecting the system to a heat treatment at a temperature of usually 30 to 180°C, preferably 70 to 150°C, more preferably 90 to 130°C.

The treating time is not specifically limited and may be suitably determined depending on the treating temperature. However, it is preferably about 5 to 30 minutes when the temperature is 90 to 130°C.

Although the composite semipermeable membrane thus obtained can be used as such, it is preferably covered for example with such a polymer as polyvinyl alcohol and polyvinyl pyrrolidone for protection of the membrane surface.

A generally used method for above covering is coating a polymer solution on the membrane surface followed by drying.

The composite semipermeable membrane of this invention has an excellent salt exclusion property and water permeability even in low pressure operation and at the same time an excellent resistance to oxidation, as shown in Example described below. It is useful for such uses as the desalination of brackish water and the concentration and recovery of valuable substances in the food or medical industry.

This invention will be further described in detail below with reference to Referential Examples, Comparative Examples, and Examples, but it is not limited thereto.

Referential Example 1

A polysulfone porous support reinforced with polyester textile fabric was formed by casting a solution consisting of 15% by weight of polysulfone (P-3500, mfd. by Union Carbide Corp.), 12.5% by weight of methylcellosolve, and 72.5% by weight of dimethylformamide on a polyester textile fabric (tafetta #71) so as to give a thickness of 200 mμ and immediately immersing the resulting system in water at 17°C.

Example 1

The polysulfone porous support obtained in Referential Example 1 was immersed in a solution consisting of 0.25% by weight of piperazine, 0.25% by weight of polyethylene glycol (molecular weight : 20,000), 0.5% by weight of sodium hydroxide, 20% by weight of methanol, and 79.0% by weight of water at 20°C for 5 minutes, then drawn up from the solution, drained of the solution at room temperature for 1 minute, dried at 50°C for 10 minutes, then immersed in 1.0% by weight solution of trimesic acid chloride in n-hexane at room temperature for 1 minute, and heat-treated in a hot air dryer at 110°C for 10 minutes. The composite membrane thus obtained was subjected to a reverse osmosis test using a 0.2% by weight aqueous magnesium sulfate solution as the feed solution at 25°C and at an operation pressure of 14 $kg/cm^2$•G. After 20 hours, it showed a performance of a water permeation rate of 76.7 $\ell/m^2$•hr and a salt exclusion percentage of 99.0%.

Comparative Example 1

A composite membrane was obtained in the same manner as Example 1 except that no polyethylene glycol was used. In a reverse osmosis test conducted in the same condition as in Example 1, the membrane showed a performance of a water permeation rate of 40.0 $\ell/m^2 \cdot hr$ and a salt exclusion percentage of 98.6%. Thus, the water permeation rate of the membrane was remarkably low as compared with that in Example 1.

Examples 2 to 4

Composite membranes were obtained in the same manner as in Example 1 except that polyethylene glycol (molecular weight : 200), polyethylene glycol (molecular weight : 2,000), or sorbital was respectively used in place of polyethylene glycol (molecular weight : 20,000). These composite membranes were subjected to a reverse osmosis test under the same conditions as in Example 1. The performances of the membranes after 20 hours are shown in Table 1.

Table 1

| Example No. | Polyhydric alcohol | Water permeation rate ($\ell/m^2 \cdot hr$) | Salt exclusion percentage (%) |
|---|---|---|---|
| 2 | Polyethylene glycol (M.W.:200) | 70.9 | 99.1 |
| 3 | Polyethylene glycol (M.W.:2,000) | 73.4 | 98.9 |
| 4 | Sorbitol | 63.5 | 98.6 |

Example 5

A composite membrane obtained in the same manner as in Example 1 was subjected to a chlorine resistance test by immersing the membrane in aqueous NaOCl solution containing 100 ppm of effective chlorine for 100 hours, and then to a reverse osmosis test under the same conditions as in Example 1. The membrane showed a water permeation rate of 77.5 $\ell/m^2 \cdot hr$ and a salt exclusion percentage of 99.0% before the chlorine resistance test, and a water penetration rate of 75.9 $\ell/m^2 \cdot hr$ and a salt exclusion percentage of 99.1% after the chlorine resistance test, thus exhibiting its excellent chlorine resistance.

Example 6

A composite membrane was prepared in the same manner as in Example 1 except that a mixture of trimesic acid chloride (TMC) and isophthalic acid chloride (IPC) (TMC/IPC = 1/2) was used in place of trimesic acid chloride.

The membrane was subjected to a reverse osmosis test under the same conditions as in Example 1, and showed a performance of a water permeation rate of 68.8 ℓ/m²•hr and a salt exclusion percentage of 98.7%.

Examples 7 and 8

Composite membranes were prepared in the same manner as in Example 1 except that the amino compounds shown in Table 2 were used in place of piperazine used in Example 1. These membranes were subjected to a reverse osmosis test under the same conditions as in Example 1 and exhibited performances shown in Table 2.

Table 2

| Example No. | Amino compound | Water permeation rate ($\ell/m^2 \cdot hr$) | Salt exclusion percentage (%) |
|---|---|---|---|
| 7 | 1,3-Dipiperazinylpropane | 61.8 | 98.7 |
| 8 | Homopiperazine | 69.3 | 98.0 |
| 9 | 2,5-Dimethylpiperazine | 78.4 | 98.2 |

Example 10

A composite membrane obtained in the same manner as in Example 1 was subjected to a reverse osmosis test using a 0.2% by weight aqueous sodium chloride solution as the feed solution at 25°C at an operation pressure of 20 kg/cm²•G. After 20 hours, it showed a performance of a water permeation rate of 151 ℓ/m²•hr and a salt exclusion percentage of 56.3%.

Example 11

The polysulfone porous support obtained in Referential Example 1 was immersed in a solution consisting of 0.25% by weight of piperazine, 0.25% by weight of bisphenol A, 0.5% by weight of sodium hydroxide, 20% by weight of methanol and 79.0% by weight of water at 20°C for 5 minutes, then drawn up from the solution, drained at room temperature for 1 minute, dried at 50°C for 10 minutes, then immersed in a 1.0% by weight solution of trimesic acid chloride in n-hexane at room temperature for 1 minute, and heat-treated in a hot air dryer at 110°C for 10 minutes. The composite membrane thus obtained was subjected to a reverse osmosis test using 0.2% by weight aqueous magnesium sulfate solution as the feed solution at 25°C at an operation pressure of 14 kg/cm²•G. After 20 hours, it showed a performance of a water permeation rate of 64.3 ℓ/m²•hr and a salt exclusion percentage of 99.5%.

Example 12

A composite membrane was obtained in the same manner as in Example 11 except that hydroquinone was used in place of bisphenol A. The membrane was subjected to a reverse osmosis test under the same condition as in Example 11. After 20 hours, it showed a performance of a water permeation rate of 67.1 ℓ/m²•hr and a salt exclusion percentage of 99.1%.

Example 13

A composite membrane was obtained in the same manner as in Example 11 except that resorcinol was used in place of bisphenol A, and subjected to a reverse osmosis test under the same conditions as in Example 11. After 20 hours of test, it showed a performance of a water permeation rate of 97.0 ℓ/m²•hr and a salt exclusion percentage of 97.5%.

Example 14

A membrane obtained in the same manner as in Example 11 was subjected to a chlorine resistance test by immersing the membrane in an aqueous NaOCl solution containing 100 ppm of effective chlorine, and then to a reverse osmosis test under the same conditions as in Example 11. The membrane showed a water permeation rate of 69.5 ℓ/m²•hr and a salt exclusion percentage of 99.1% before the chlorine resistance test, and a water permeation rate of 71.2 ℓ/m²•hr and a salt exclusion percentage of 99.0% after the chlorine resistance test, thus exhibiting its excellent chlorine resistance.

Example 15

A composite membrane was obtained in the same manner as in Example 11 except that a mixture of trimesic acid chloride (TMC) and isophthalic acid chloride (IPC) (TMC/IPC = 1/2) was used in place of trimesic acid chloride. The membrane was subjected to a reverse osmosis test under the same conditions as in Example 11, and showed a performance of a water permeation rate of 59.7 ℓ/m²•hr and a salt exclusion percentage of 99.3%.

Example 16

A composite membrane obtained in the same manner as in Example 11 was subjected to a reverse osmosis test using a 0.2% by weight aqueous sodium chloride solution as the feed solution at 25°C and at an operation pressure of 20 kg/cm²•G. After 20 hours, it showed a performance of a water permeation rate of 133 ℓ/m²•hr and a salt exclusion percentage of 62.8%.

Example 17

A composite membrane was prepared in the same manner as in Example 1 except that the temperature in the drying treatment conducted after immersion in the mixed solution of piperazine and polyethylene glycol and draining was altered from 50°C to 30°C.

The membrane was subjected to a reverse osmosis test under the same conditions as in Example 1. The results of the test are shown in Table 3.

Example 18

A composite membrane was obtained in the same manner as in Example 17 except that 1,3-di(4-piperidino)propane was used in place of piperazine. The membrane was subjected to a reverse osmosis test in the same manner as in Example 17. The test results are shown in Table 3.

Comparative Example 2

A composite membrane was obtained in the same manner as in Example 17 except that polyvinyl alcohol (Poval 224, a trade name, mfd. by Kuraray Co., Ltd.) was used in place of polyethylene glycol. A reverse osmosis test was conducted by use of the membrane in the same manner as in Example 17. The test results are shown in Table 3.

Comparative Example 3

A composite membrane was obtained in the same manner as in Example 17 except that polyethylene glycol was not used. The membrane was subjected to a reverse osmosis test in the same manner as in Example 17. The test results are shown in Table 3.

Comparative Example 4

A composite membrane was obtained in the same manner as in Comparative Example 3 except that a mixture of trimesic acid chloride (TMC) and isophthalic acid chloride (IPC)(TMC/IPC = 1/2) was used in place of TMC. The membrane was subjected to a reverse osmosis test in the same manner as in Example 17. The test results are shown in Table 3.

Table 3

| Example No. | Water permeation rate (ℓ/$m^2$·hr) | Salt exclusion percentage (%) |
|---|---|---|
| Example 17 | 118 | 99.6 |
| " 18 | 74 | 98.2 |
| Comparative Example 2 | 55 | 99.0 |
| " 3 | 50 | 99.6 |
| " 4 | 53 | 98.0 |

Examples 19 and 20, and Comparative Examples 5 and 6

Composite membrane obtained respectively in the same manner as in Examples 17 and 18, and Comparative Examples 3 and 4 were subjected to a reverse osmosis test using a 0.2% by weight aqueous sodium chloride solution as the feed solution at 25°C and at an operation pressure of 20 kg/$cm^2$•G. The results of these tests are shown in Table 4.

Table 4

| Example No. | Water permeation rate ($\ell/m^2 \cdot hr$) | Salt exclusion percentage (%) |
|---|---|---|
| Example 19 | 175 | 58 |
| " 20 | 136 | 58 |
| Comparative Example 5 | 108 | 60 |
| " 6 | 71 | 58 |

**Claims**

1. A composite semipermeable membrane which is obtained by crosslinking, on a porous support,
(1) at least one polyhydroxy compound selected from the group consisting of compounds represented by the following general formulas (I), (II), (III) and (IV)

$HO \leftarrow CH_2\text{-}CH_2\text{-}O \rightarrow_{\ell} H$ (I)

wherein $\ell$ denotes an integer from 1 to 500,

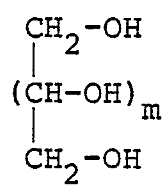

(II)

wherein m denotes an integer from 1 to 4,

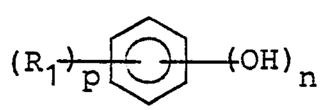

(III)

wherein n denotes an integer from 2 to 4; $R_1$ denotes a substituent; and p denotes 0 or a positive integer satisfying $p + n \leq 6$,

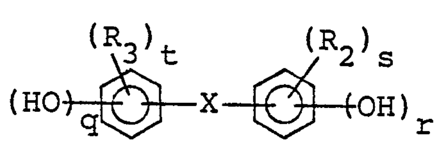

(IV)

wherein X denotes a simple bond or a divalent linking group; r and q each denotes 1 or 2; $R_2$ and $R_3$ each denotes a substituent; and s and t denote 0 or a positive integer satisfying $s + r \leq 5$ and $t + q \leq 5$,

respectively, and

(2) an amino compound having at least two secondary amino groups and no primary amino group in the molecule, with

(3) a multifunctional compound capable of reacting with the hydroxyl group and a secondary amino group.

2. A composite semipermeable membrane according to claim 1, wherein the polyhydroxy compound represented by the general formula (I) is at least one member selected from the group consisting of polyethylene glycol (having a molecular weight of about 200 to 20,000), triethylene glycol, and ethylene glycol.

3. A composite semipermeable membrane according to claim 1, wherein the polyhydroxy compound represented by the general formula (II) is at least one member selected from the group consisting of glycerol, erythritol, xylitol, and sorbitol.

4. A composite semipermeable membrane according to claim 1, wherein the compound represented by the general formula (III) is at least one member selected from the group consisting of hydroquinone, resorcinol, catechol, pyrogallol, and phloroglucinol.

5. A composite semipermeable membrane according to claim 1, wherein the compound represented by the general formula (IV) is at least one member selected from the group consisting of 4,4′-dihydroxybiphenyl, 2,2-bis(4-hydroxyphenyl)propane, bis(4-hydroxyphenyl)methane, 1,1-bis(4-hydroxyphenyl)ethane, bis(4-hydroxyphenyl)cyclohexylmethane, bis(4-hydroxyphenyl) sulfone, bis(4-hydroxyphenyl) ketone, bis(4-hydroxyphenyl) sulfide, bis(4-hydroxyphenyl) ether, 3-chloro-4,4′-hydroxybiphenyl, 3,3′-dichloro-4,4′-hydroxybiphenyl, and bis(4-hydroxy-3,5-dimethylphenyl) ketone.

6. A composite semipermeable membrane according to claim 1, wherein the amino compound is a compound represented by the general formula (V)

$R_4NH-Y-NHR_5$ (V)

wherein Y denotes an aliphatic, alicyclic, or aromatic group of 20 or less carbon atoms; and $R_4$ and $R_5$ each denotes an alkyl group of 1 to 3 carbon atoms.

7. A composite semipermeable membrane according to claim 1, wherein the compound represented by the general formula (V) is N,N′-dimethylethylenediamine, N,N′-diethylpropanediamine, N,N′-dimethyl-m-phenylenediamine, N,N′-dimethyl-p-phenylenediamine, or N,N′-dimethyl-1,4-cyclohexylenediamine.

8. A composite semipermeable membrane according to claim 1, wherein the amino compound is a compound represented by the general formula (VI)

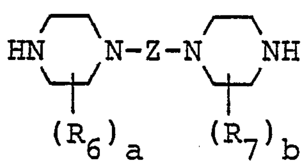

(VI)

wherein Z denotes an alkylene group of 1 to 4 carbon atoms; $R_6$ and $R_7$ each denotes an alkyl group of 1 to 3 carbon atoms; and a and b each denotes an integer from 0 to 4.

9. A composite semipermeable membrane according to claim 8, wherein the compound represented by the general formula (VI) is 1,3-dipiperazylpropane or dipiperazylmethane.

10. A composite semipermeable membrane according to claim 1, wherein the amino compound is a compound represented by the general formula (VII)

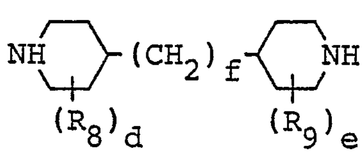

(VII)

wherein $R_8$ and $R_9$ each denotes an alkyl group of 1 to 3 carbon atoms; and d, e, and f each denotes an integer from 0 to 4.

11. A composite semipermeable membrane according to claim 10, wherein the compound represented by the general formula (VII) is 1,3-di(4-piperidino)propane, 1,2-di(4-piperidino)ethane, 4,4'-bipiperidine, or 3,3'-dimethyl-4,4'-bipiperidine.

12. A composite semipermeable membrane according to claim 1, wherein the amino compound is a compound represented by the general formula (VIII)

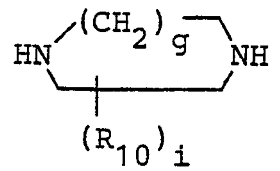

(VIII)

wherein $R_{10}$ denotes an alkyl group of 1 to 3 carbon atoms; g denotes 1 or 2; and i denotes an integer from 0 to 4.

13. A composite semipermeable membrane according to claim 12, wherein the compound represented by the general formula (VIII) is piperazine, 2-methylpiperazine, 2,5-dimethylpiperazine, or homopiperazine.

14. A composite semipermeable membrane according to claim 1, wherein the multifunctional compound is a compound having at least two functional groups selected from an acid halide group, sulfonyl halide group, N-haloformyl group, and acid anhydride group.

15. A composite semipermeable membrane according to claim 14, wherein the multifunctional compound is at least one member selected from the group consisting of isophthalic acid chloride, terephthalic acid chloride, trimesic acid chloride, pyromellitic acid chloride, cyclohexanedicarboxylic acid chloride, piperazine-N,N'-dicarbonyl chloride, dipiperidylmethane-N,N'-dicarbonyl chloride, pyridine-2,6-dicarboxylic acid chloride, 1-chlorosulfonylbenzene-3,4-dicarboxylic acid chloride, benzene-m-disulfonic acid chloride, 4-chloroformylphthalic acid anhydride, and pyromellitic acid anhydride.

16. A composite semipermeable membrane according to claim 14, wherein the multifunctional compound is at least one member selected from the gorup consisting of trimesic acid chloride, isophthalic acid chloride, and terephthalic acid chloride.

17. A composite semipermeable membrane according to claim 1, wherein the material of the porous support is polysulfone, polyethersulfone, polyacrylonitrile, polyvinyl chloride, cellulose acetate, or cellulose nitrate.

18. A composite semipermeable membrane according to claim 1, wherein the mixing ratio of the polyhydroxy compound to the amino compound is 100:50 to 100:200 by weight.

19. A composite semipermeable membrane according to claim 1, wherein the polyhydroxy compound and the amino compound are those dissolved in at least one member selected from the group consisting of methanol, ethanol, propanol, and water.

20. A composite semipermeable membrane according to claim 1, wherein the concentration of the total of the polyhydroxy compound and the amino compound is 0.2 to 3% by weight.

21. A composite semipermeable membrane according to claim 1, wherein the polyhydroxy compound and the amino compound are those which have been coated on or made to impregnate a porous support as a mixed solution of both compounds and which, after draining of the solution, have been subjected to drying treatment at 20 to 40°C.

22. A composite semipermeable membrane according to claim 1, wherein the multifunctional compound is the one which has been dissolved in a hydrocarbon type solvent to a concentration of 0.1 to 5% by weight.

23. A process for producing a composite semipermeable membrane which comprises coating or impregnating a porous support with a solution containing (1) at least one polyhydroxy compound selected from the group consisting of compounds represented by the following general formulas (I), (II), (III) and (IV)

$HO-(CH_2-CH_2-O)_{\ell}-H$ (I)

wherein $\ell$ denotes an integer from 1 to 500,

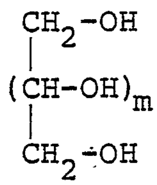

(II)

wherein m denotes an integer from 0 to 4,

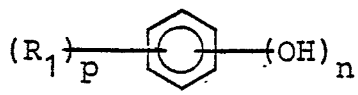

(III)

wherein n denotes an integer from 2 to 4; $R_1$ denotes a halogen atom or lower alkyl group; and p denotes 0 or a positive integer satisfying $n + p \leq 6$,

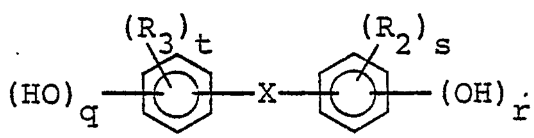

(IV)

wherein X denotes a simple bond, a divalent hydrocarbon group, -O-, -CO-. $-SO_2-$, or -S-; r and q each denotes 1 or 2; $R_2$ and $R_3$ each denotes a halogen atom or lower alkyl group; and t and s denote 0 or a positive integer satisfying $s + r \leq 5$ and $t + q \leq 5$, respectively, and (2) an amino compound having at least two secondary amino groups and no primary amino group in the molecule, and then contacting the resulting system with (3) a multifunctional compound capable of reacting with the hydroxyl group and a secondary amino group, thereby to effect the crosslinking polymerization of the polyhydroxy compound and the amino compound.